# EUROPEAN PATENT SPECIFICATION

(11) **EP 3 299 614 B1**
(45) Date of publication and mention of the grant of the patent: **11.11.2020**
(21) Application number: 16190564.1
(22) Date of filing: 26.09.2016
(51) Int. Cl.: F03D 7/04

(54) **METHOD, DEVICE AND SYSTEM FOR MANAGING A WIND FARM**
VERFAHREN, VORRICHTUNG UND SYSTEM ZUR VERWALTUNG EINES WINDPARKS
PROCÉDÉ, DISPOSITIF ET SYSTÈME DE GESTION DE PARC ÉOLIEN

(43) Date of publication of application: 28.03.2018
(73) Proprietor: Siemens Gamesa Renewable Energy A/S, 7330 Brande (DK)
(72) Inventor: UPADHYAYA G, Rashmi, 560061 Bangalore, Karnataka (IN); PARAMESHWARI, R., 560029 Bangalore, Karnataka (IN)
(74) Representative: Aspacher, Karl-Georg

(56) References cited:
- EP-A1- 2 233 737
- US-A1- 2011 193 344
- US-A1- 2015 308 416

## Description

The present invention relates to managing a wind farm. Typically, a wind farm comprises several wind turbines located over large areas that are rich in wind resources. However, these areas are prone to unpredictable and unfavorable weather conditions, such as thunderstorms, microburst and icing conditions. Therefore, the wind turbines in the wind farm are organized in a manner to reduce the damage caused by the weather conditions.

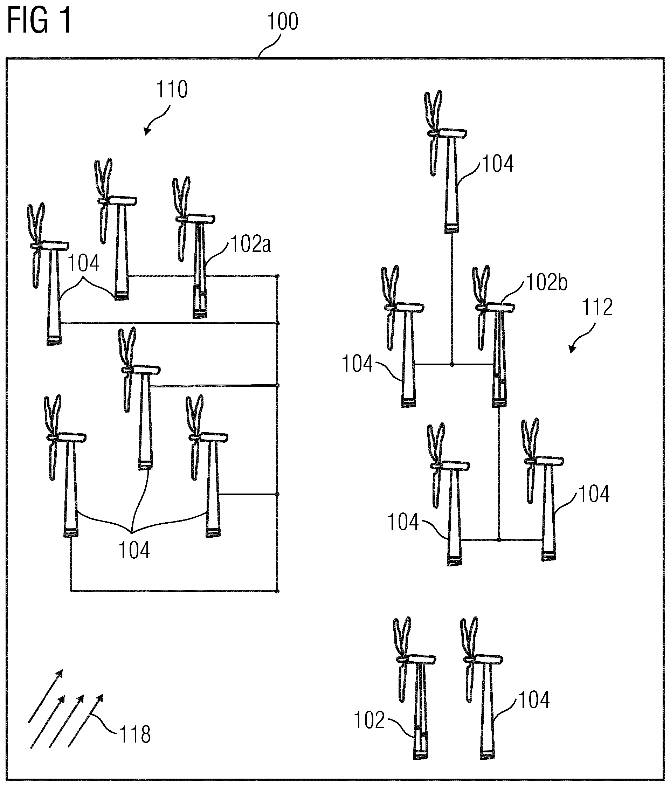

Such a method and system are known to a person skilled in the art. FIG 1 is a graphical representation of an arrangement to manage a wind farm 100 according to the state of the art. The wind farm 100 comprises master wind turbines 102 and slave wind turbines 104. The slave wind turbines 104 are divided into groups 110 and 112. Each group 110, 112 of slave wind turbines 104 are associated with master wind turbines 102a, 102b, respectively.

The master wind turbines 102a and 102b include sensors that are capable of detecting the weather condition such as temperature, humidity and ice formation. When the weather conditions are unfavorable, the master wind turbines 102a and 102b are configured to shut down the slave wind turbines 104 to avoid damage. As seen in FIG 1 , the master wind turbines 102a and 102b are not strategically placed to accurately detect turbulence in direction 118. Since the master wind turbines 102a and 102b are not optimally placed to assess the change in weather conditions they are not able to promptly shut down the slave wind turbines 104 in the direction 118.

The above mentioned master-slave configuration for managing wind turbines is disadvantageous as it requires manual configuration of the master wind turbines and the slave wind turbines. Therefore, a user needs to have complete knowledge regarding the location of the wind farm to determine the configuration of the wind farm. Further, wind turbines are susceptible to severe damage if the master-slave configuration is incorrectly done.

From document EP 2 233 737 A1 a wind farm consisting of a plurality of wind turbines is known, wherein at least two of the wind turbines can take on the leadership of the wind farm.

Therefore, it is an object of the present invention to provide a method and system of the aforementioned kind that are efficient in managing the wind farm.

The method and system according to the present invention achieve this object by analyzing operating parameters associated with the wind farm, wherein the wind farm comprises a plurality of wind turbines having a turbine profile and wherein the turbine profile is one of a master profile and a slave profile.

A first aspect of the present invention relates to a method according to claim 1 of managing a wind farm comprising: analyzing operating parameters associated with the wind farm, wherein the wind farm comprises a plurality of wind turbines, each wind turbine having a turbine profile, wherein the turbine profile is one of a master profile and a slave profile, and wherein the operating parameters comprise historical operational data and real-time operational data associated with the wind farm;
determining at least one wind turbine in the slave profile whose turbine profile needs to be changed based on the operating parameters; and dynamically changing the turbine profile of the at least one wind turbine from the slave profile to the master profile.

The term "turbine profile" indicates the role of the wind turbines. The term "master profile" and "master wind turbine" can be used interchangeably. Similarly, the term "slave profile" can be read as "slave wind turbine". Furthermore, the terms "master profile" and "slave profile" have been used to indicate that the turbine profile of a wind turbine can be changed during its operation.

Analyzing the operational parameters includes analyzing historical operational data and real-time operational data associated with the wind farm. In particular, the historical operational data and the real-time operational data include meteorological parameters and performance parameters of the wind farm. For example, meteorological parameters include but are not limited to wind direction, wind speed, wind gradient, atmospheric temperature, relative humidity, precipitation, icing conditions, barometric pressure and the like. The performance parameter of the wind farm include but are not limited to blade mass, blade acoustics, turbine power, KVarh import/export, site power, current year down time and average generator temperature.

The method includes determining at least one wind turbine in the slave profile whose turbine profile needs to be changed based on the operating parameters. For example, the real-time operational data is analyzed to determine whether there is a change in the operational parameters. If there is the change in the operational parameters, the need to change the turbine profile is determined by analyzing the historical operational data.

Further, the method includes dynamically changing the turbine profile of the at least one wind turbine from the slave profile to the master profile. Accordingly, the turbine profile for remaining wind turbines is changed to the slave profile. Therefore, considering the real-time operational data in the operational data to manage placement of master wind turbines the wind farm is advantageous as slave wind turbines can be shut down efficiently during unfavorable weather conditions.

According to an embodiment, the method comprises the further step of monitoring the real-time operational data associated with the wind farm. The real-time operational data may be monitored by means of sensors and a controller. In an example, the wind turbines in a wind farm comprise sensors that are capable of capturing parameters related to meteorological parameters and performance parameters of the wind farm and wind turbines. Each of the wind turbines include communication devices that are coupled to the sensors. The communication devices transmit the real-time operational data captured by the sensors to the controller via a communication network.

According to another embodiment, the step of analyzing operating parameters associated with the wind farm includes comparing the real-time operational data with preset operating parameters to determine a change in the operating parameters, and determining whether the turbine profile of the at least one wind turbine needs to be changed, based on the change in the operating parameters and historical operational data.

For example, change in operating parameters includes and is not limited to change in wind direction, change in temperature, ice formation on one or more blades, stoppage of a turbine, change in atmospheric pressure, increase in turbine generator temperature, etc.

With regard to the determination of the wind turbine, in a non-limiting example the historical operational data is used to determine whether any damage was caused to the wind turbines for similar meteorological parameters in the past. The historical operational data may also include data prior to setting up of the wind farm, such as meteorological parameters of the location in which the wind farm is set up.

According to yet another embodiment, the method includes determining a location in a plurality of locations in the wind farm for a wind turbine with the master profile, based on the operating parameters. For example, the real-time operational parameters and the historical operational data are compared for similar performance parameters and meteorological parameters. By comparing the historical operational data and the real-time operational data, the location suitable for the wind turbine with the master profile is determined. In an example, the location for the wind turbine with the master profile is in wind direction.

The method includes ranking wind turbines in the location based on the real-time operational data. In an example, the real-time operational data indicates the wind direction, accordingly the wind turbines in the wind direction are in the location suitable for the master wind turbine. In another example, the sensors in a wind turbine indicate overheating in a generator of the wind turbine. The wind direction and the overheating condition in the wind turbine are considered prior to ranking the wind turbines. Accordingly, the method includes determining the at least one wind turbine whose turbine profile needs to be changed to the master profile based on the ranking of the wind turbines.

According to an embodiment, the method includes activating functions associated with the master profile in the at least one wind turbine. The turbine profile of remaining wind turbines are changed to slave profile and a control link is established between the at least one wind turbine with master profile and the remaining wind turbines with the slave profile. For example, the at least one wind turbine controls the remaining wind turbines by determining whether to start or stop the remaining wind turbines based on the weather conditions. As a result of the change in turbine profile, the at least one wind turbine is strategically placed such that it is capable of accurately detecting unfavorable weather conditions. In the event that unfavorable weather conditions exists, the at least one wind turbine is configured to shut down the remaining wind turbines to avoid damage.

According to the present invention, there are also disclosed a device and a system, comprising a controller having a memory for storing computer program codes that comprise instructions executable by a processing unit for performing the method disclosed above for managing the wind farm.

Thus, a second aspect of the invention relates to a device according to claim 6 for managing a wind farm comprising a controller operably connected to each of the wind turbines via a communication network. The controller comprises a processing unit comprising one or more processors, a memory communicatively coupled with the processing unit. The memory is configured to store the historical operational data and computer program instructions defined by modules of the device. The processing unit is configured to execute the defined computer program instructions in the modules. Further, the processing unit is configured access the historical operational data and the real-time operational data from the database and the memory.

The memory comprises modules of the device, the modules of the device comprising an analyzer for analyzing operating parameters associated with the wind farm, wherein the wind farm comprises a plurality of wind turbines, each wind turbine having a turbine profile, wherein the turbine profile is one of a master profile and a slave profile, and wherein the operating parameters comprises historical operational data and real-time operational data associated with the wind farm. The device further comprises a turbine identification module for determining at least one wind turbine in the slave profile whose turbine profile needs to be changed based on the operating parameters. Also, the device comprises a profile change module for dynamically changing the turbine profile of the at least one wind turbine from the slave profile to the master profile. Therefore, the device is capable of optimally changing the turbine profile of the at least one wind turbine in slave profile based on the operating parameters. This enables automatic master-slave configuration of the wind turbines in the wind farm.

According to an embodiment, the analyzer comprises a comparator for comparing the real-time operational data with preset operating parameters to determine a change in the operating parameters. The comparator compares the real-time operational data with preset operating parameters to determine if there is a change in the operating parameters. For example, change in operating parameters includes and is not limited to change in wind direction, change in temperature, ice formation on one or more blades, stoppage of a turbine, change in atmospheric pressure, increase in turbine generator temperature, etc.

Further, the analyzer also comprises a change verification module for determining whether the turbine profile of the at least one wind turbine needs to be changed, based on the change in the operating parameters and historical operational data. Once the change in the operating parameters is determined, the change verification module determines whether the turbine profile of the wind turbines needs to be changed, based on the change in the operating parameters and the historical operational data. For example, the processing unit, while executing the change verification module, scans the historical operational data to determine whether any damage caused to the wind turbines for similar meteorological parameters in the past.

According to another embodiment, the turbine identification module of the device comprises a location identification module and a ranking module. Using the location identification module a location in the wind farm for a wind turbine to have the master profile is identified. The location identification module, determines the location based on the historical operational data and the real-time operational data. For example, the processing unit compares the real-time operational parameters and the historical operational data for similar performance parameters and meteorological parameters. By comparing the historical operational data and the real-time operational data, the processing unit determines the location suitable for the wind turbine with the master profile using the location identification module. For example, the location for the wind turbine with the master profile is in changed wind direction.

Further, the ranking module of the turbine identification module ranks the wind turbines in the optimal location to determine the one or more wind turbines whose turbine profile needs to be changed to the master profile based on the real-time operational data. For example, the real-time operational data indicates the changed wind direction and accordingly the wind turbines that are in the optimum location are ranked. In an example, a sensor indicates overheating in a generator of one of the wind turbines. The processing unit considers the wind direction and the overheating condition in the wind turbine and determines that the turbine profile of another wind turbine must be changed to the master profile. In other words, role of the wind turbine without overheating in its generator needs to be changed from the slave wind turbine to the master wind turbine.

According to yet another embodiment, the profile change module of the device comprises a master activator module and a maser communication module. The processing unit by means of the profile change module dynamically changes the slave profile of the wind turbine to the master profile. Accordingly, the profile change module dynamically changes the master profile of the wind turbine to the slave profile by means of a slave module. The change in the turbine profile is effected by means of a master activator module and a master communication module. The master activator module activates functions associated with the master profile in the wind turbine and the master communication module establishes control link between the wind turbine in the master profile and the wind turbines in the slave profile.

A third aspect of the invention relates to a system for managing a wind farm comprising the device for managing the wind farm and a plurality of wind turbines to be managed by the device. The device according to the present invention is installed on and accessible by a user device, for example, a personal computing device, a workstation, a client device, a network enabled computing device, any other suitable computing equipment, and combinations of multiple pieces of computing equipment. In an example, the device for managing the wind farm can also be accessed via a cloud computing device. Therefore, the device for managing the wind farm can be operated from a remote location, different from the location of the wind farm.

Further, the system disclosed herein is in operable communication with a database over a communication network. The database includes historical operational data of the wind farm. The historical operational data includes performance parameters associated with the wind farm that have been recorded during setup and operation of the wind farm. The historical operational data also includes data prior to setting up of the wind farm, such as meteorological parameters of the location in which the wind farm is set up. The database can be a location on a file system directly accessible by the system. In another example, the database is configured as cloud based database implemented in a cloud computing environment. Furthermore, the communication network is, for example, a wired network, a wireless network, a communication network, or a network formed from any combination of these networks.

According to an embodiment, the system comprises a plurality of sensors to monitor operating parameters associated with the wind farm. For example, each of the wind turbines includes sensors. The sensors are capable of capturing parameters related to meteorological parameters and performance parameters of the wind farm and the wind turbines. The meteorological parameters and the performance parameters captured in real-time to form real-time operational data.

According to another embodiment, each of the plurality of wind turbines comprises a communication device to transmit data captured by the sensors. Each of the communication devices communication devices includes a processor, a memory, a receiver and a transmitter. The communication devices collect data from the respective sensors and store a local copy of the data on the memory. The transmitter is used to transmit the sensor data and the receiver is used to receive control signals for the operation of each of the wind turbines. The transmitter is instrumental in sending the real-time operating parameters to the device, which is used to dynamically change the turbine profile of the wind turbines in the wind farm. Therefore, the device in the system enables automatic change in master-slave configuration of the wind turbines in the wind farm is advantageous as the real-time operating parameters can vary suddenly.

A fourth aspect of the invention relates to a wind farm, comprising one or more clusters of wind turbines. The wind turbine clusters are located in different geographical locations. Each wind turbine cluster comprises at least one wind turbine in a master profile and remaining wind turbines in a slave profile. Each of the wind turbine clusters also includes a communication network. The communication networks transmit sensor data from the wind turbines and receive control data for managing the wind turbines in each of the clusters. The wind farm also includes the device for managing the wind turbine clusters employing the method as disclosed above.

According to an embodiment, each of the clusters comprises one or more turbines located in different geographical locations. The device according to the present invention is installed on and accessible by a cloud computing device. Therefore, the device for managing the wind farm can be operated from a remote location, and is capable of managing the one or more clusters of wind turbines in different geographical locations.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
FIG 1: illustrates a graphical representation of an arrangement to manage a wind farm according to the state of the art;
FIG 2: is a process flowchart illustrating a method for managing the wind farm according to the present invention;
FIG 3: is a block diagram illustrating a system for managing a wind farm according to the method in FIG 2;
FIGS 4A-4B: are graphical representations of a wind farm that illustrates an example condition in which wind direction is considered while determining the turbine profile of the wind turbines in a wind farm;
FIG 5: illustrates a graphical representation of the wind farm in FIG 4A; and
FIG 6: illustrates multiple clusters of wind turbines of a wind farm.

Various embodiments are described with reference to the drawings, wherein like reference numerals are used to refer to like elements throughout. Further, numerous specific details are set forth in order to provide thorough understanding of one or more embodiments of the present invention. These examples must not be considered to limit the invention to configurations disclosed in the figures. It may be evident that such embodiments may be practiced without these specific details.

For the purpose of the description the term "turbine profile" for the purpose of this invention indicates the role of the wind turbines. The turbine profile can be either a master profile or a slave profile. Further, the phrase "wind turbine with master profile" and "master wind turbine" can be used interchangeably. Similarly, the phrase "wind turbine with slave profile" is to be read as "slave wind turbine". Furthermore, the terms "master profile" and "slave profile" have been used to indicate that the turbine profile of a wind turbine can be changed during its operation. In other words, the wind turbine can be a master wind turbine at time T1 and a slave wind turbine at time T2. The process of changing the turbine profile is explained in detail as under.

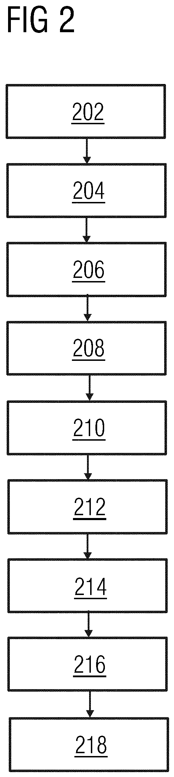

FIG 2 is a process flowchart illustrating a method 200 for managing a wind farm 301. The wind farm 301 comprises of wind turbines each having a turbine profile. The turbine profile can be either the master profile or the slave profile. Operation of the wind farm 301 is captured through operating parameters that indicated weather conditions and performance of the wind farm 301. The operating parameters comprise historical operational data and real-time operational data associated with the wind farm.

The method 200 begins with the step 202, i.e. monitoring meteorological parameters and performance parameters associated with the wind farm 301. The term "meteorological parameters" include parameters related to weather conditions of the wind farm 301. For example, meteorological parameters include wind direction, wind speed, wind gradient, atmospheric temperature, relative humidity, precipitation, icing conditions, barometric pressure and the like. In the below description weather conditions and the term "meteorological parameters" have been used interchangeably and the same are not limited to the examples listed above. Further, the term "performance parameters" include the performance parameter of the wind farm 301 such as blade mass, blade acoustics, turbine power, KVarh import/export, site power, current year down time and average generator temperature. The meteorological parameters and the performance parameters captured in real-time to form the real-time operational data. Additionally, the real-time operational data includes weather forecast associated with the wind farm 301.

The method 200 includes analyzing the operating parameters of the wind farm 301. The operating parameters are analyzed in the steps 204 and 206.

At step 204 the real-time operational data is compared with preset operating parameters to determine if there is a change in the operating parameters. For example, change in operating parameters includes and is not limited to change in wind direction, change in temperature, ice formation on one or more blades, stoppage of a turbine, change in atmospheric pressure, increase in turbine generator temperature, etc.

At step 206, the method 200 determines whether the turbine profile of the wind turbines needs to be changed, based on the change in the operating parameters and the historical operational data. In an embodiment, at step 206 the historical operational data is scanned to determine whether any damage was caused to the wind turbines for similar meteorological parameters in the past. Based on the historical operational data it is determined that the turbine profile of the wind turbines need to be changed.

At step 208, a location in the wind farm 301 suitable for a master wind turbine is determined. The historical operational data and the real-time operational data are used to determine the location in the wind farm. For example, the real-time operational data is compared with the historical operational data to determine similarities in the meteorological parameters and the performance parameters of the wind farm 301. By comparing, the location suitable for the master wind turbine is determined.

At step 210, wind turbines in the location suitable for the master wind turbine are shortlisted and ranked based on the real-time operational data. For example, the weather forecast and real time meteorological parameters, such as wind direction and speed are used to rank the shortlisted wind turbines.

At step 212, based on the ranking one wind turbine is selected as the master wind turbine. In an embodiment, more than one wind turbine can be selected as the master wind turbine.

At step 214, the turbine profile of the wind turbine selected as the master wind turbine is dynamically changed from the slave profile to the master profile. The change in the turbine profile is done by activating functions associated with the master profile in the selected wind turbine. At step 216, the turbine profile for remaining wind turbines is dynamically changed to the slave profile.

At step 218, the wind turbine selected as the master wind turbine establishes control link with the remaining wind turbines in the wind farm 301.

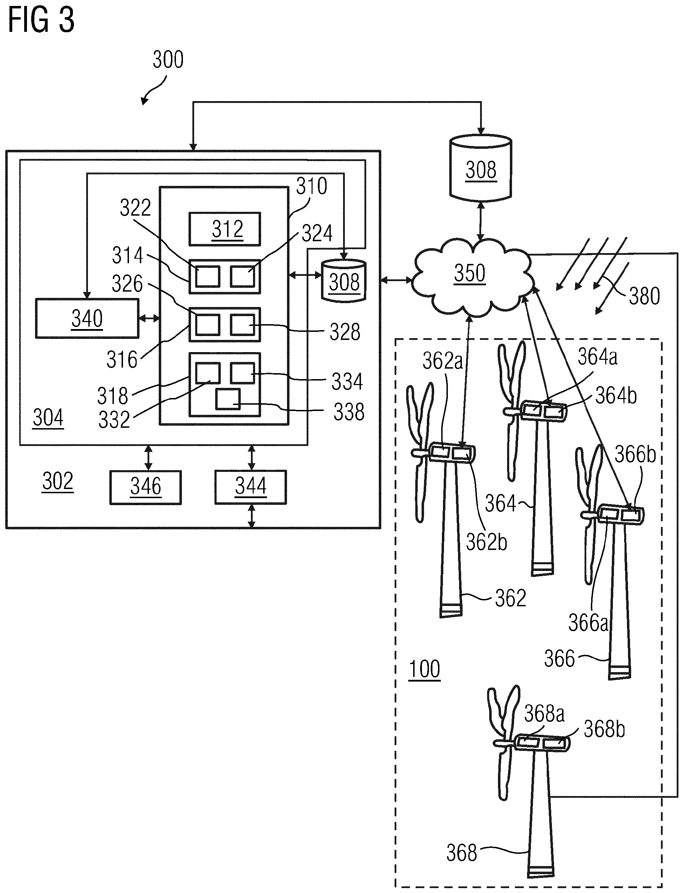

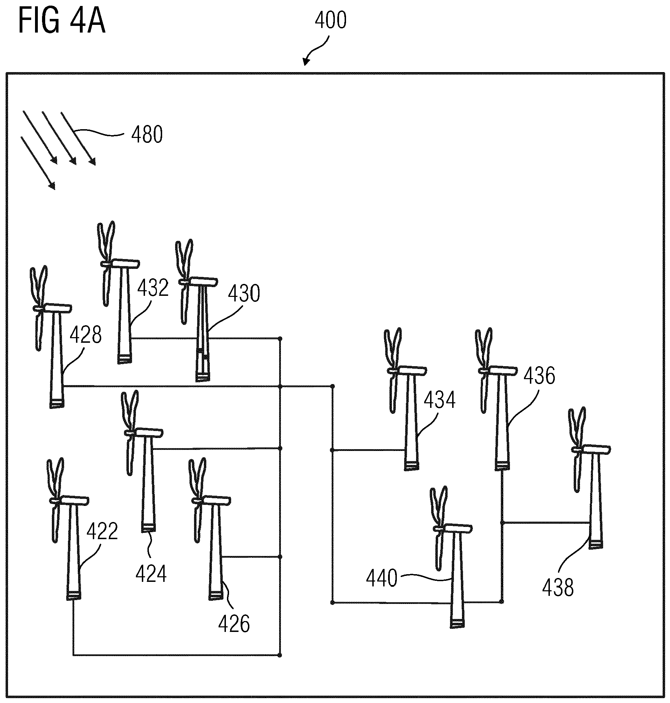

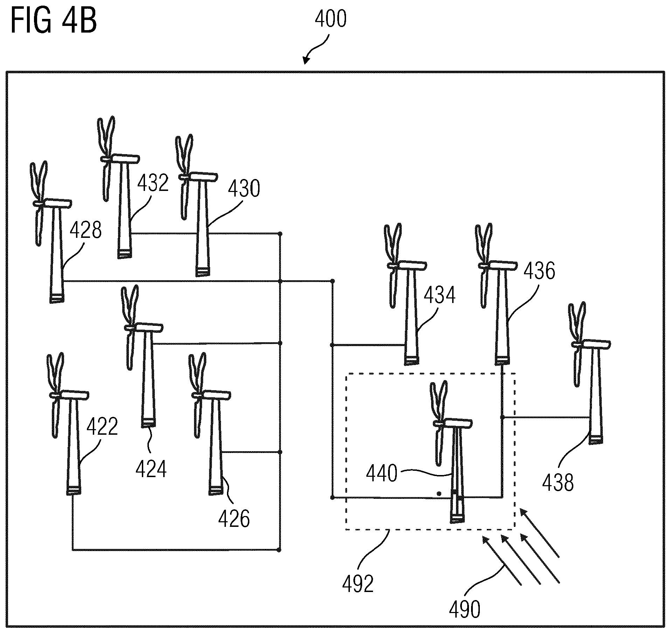

FIG 3 is a block diagram illustrating a system 300 for managing the wind farm 301 according to the method in FIG 2. The wind farm 301 comprises wind turbines 362, 364, 366 and 368, each having a turbine profile. The term "turbine profile" for the purpose of this invention indicates the role of the wind turbines. The turbine profile can be either a master profile or a slave profile. For example, in FIG 3, the turbine profile of the wind turbine 368 is the master profile and the turbine profile of the wind turbines 362, 364 and 366 is the slave profile. The wind turbine 368 is capable of controlling the wind turbines 362, 364 and 366 to extent of configuring the wind turbine with the slave profile to shut down. According to the present invention, the operation of the wind turbines 362, 364, 366 and 368 in the master profile and the slave profile is changed dynamically as explained below and in detail in FIGS 4A and 4B.

Each of the wind turbines 362, 364, 366 and 368 include sensors 362a, 364a, 366a and 368a. The sensors 362a, 364a, 366a and 368a are capable of capturing parameters related to meteorological parameters and performance parameters of the wind farm 301 and wind turbines 362, 364, 366 and 368. The meteorological parameters and the performance parameters captured in real-time to form real-time operational data.

Further, each of the wind turbines 362, 364, 366 and 368 are provided with communication devices 362b, 364b, 366b and 368b. The communication devices 362b, 364b, 366b and 368b are coupled to the sensors communication devices 362a, 364a, 366a, respectively. Each of the communication devices communication devices 362b, 364b, 366b and 368b include a processor, a memory, a receiver and a transmitter. The communication devices 362b, 364b, 366b and 368b collect data from the respective sensors 362a, 364a, 366a and 368a and store a local copy of the data on the memory. The transmitter is used to transmit the sensor data and the receiver is used to receive control signals for the operation of each of the wind turbines 362, 364, 366 and 368.

The system 300 according to the present invention is installed on and accessible by a user device, for example, a personal computing device, a workstation, a client device, a network enabled computing device, any other suitable computing equipment, and combinations of multiple pieces of computing equipment. The system 300 disclosed herein is in operable communication with a database 308 over a communication network 350. The database 308 includes historical operational data of the wind farm 301. The historical operational data includes performance parameters associated with the wind farm that have been recorded during setup and operation of the wind farm 301. The historical operational data also includes data prior to setting up of the wind farm, such as meteorological parameters of the location in which the wind farm 301 is set up. The database 308 can be a location on a file system directly accessible by the system 300. In another embodiment of the database 308 is configured as cloud based database implemented in a cloud computing environment. The communication network 350 is, for example, a wired network, a wireless network, a communication network, or a network formed from any combination of these networks.

The system 300 disclosed herein comprises a device 302 that includes a controller 304, a network interface 344 and an Input/Output device 346. The controller 304 comprises a memory 310 and a processing unit 340 comprising one or more processors communicatively coupled to the memory 310. As used herein, "memory" refers to all computer readable media, for example, non-volatile media, volatile media, and transmission media except for a transitory, propagating signal. The memory 310 is configured to store the historical operational data and computer program instructions defined by modules, for example, 312, 314, 316, 318 etc., of the device 302. The processing unit 340 is configured to execute the defined computer program instructions in the modules. Further, the processing unit 340 is configured access the historical operational data and the real-time operational data from the database 308 and the memory 310.

The device 302 further comprises a sensor interface 312, an analyzer 314, a turbine identification module 316 and a profile change module 318. The sensor interface 312 monitors meteorological parameters and performance parameters associated with the wind farm in real-time to generate the real-time operational data. Further, the sensor interface updates the real-time operational data of the wind farm with weather forecast data received via the communication network 350 and the network interface 344.

The analyzer 314 analyzes operating parameters associated with the wind farm 301 using a comparator 322 and a change verification module 324. The term "operating parameters" include the historical operational data and real-time operational data. The comparator 322 compares the real-time operational data with preset operating parameters to determine if there is a change in the operating parameters. For example, change in operating parameters includes and is not limited to change in wind direction, change in temperature, ice formation on one or more blades, stoppage of a turbine, change in atmospheric pressure, increase in turbine generator temperature, etc. Once the change in the operating parameters is determined, the change verification module 324 determines whether the turbine profile of the wind turbines 362, 364, 366 and 368 needs to be changed, based on the change in the operating parameters and the historical operational data. In a non-limiting example, the processing unit 340, while executing the change verification module 324, scans the historical operational data to determine whether any damage caused to the wind turbines 362, 364, 366 and 368 for similar meteorological parameters in the past. Further, the device 302 includes the turbine identification module 316 that determines a location in the wind farm 301 for a wind turbine to have the master profile using a location identification module 326. The location identification module 326, determines the location based on the historical operational data and the real-time operational data. For example, the processing unit 340 compares the real-time operational parameters and the historical operational data for similar performance parameters and meteorological parameters. By comparing the historical operational data and the real-time operational data, the processing unit 340 determines the location suitable for the wind turbine with the master profile using the location identification module 326. In FIG 3 , the location for the wind turbine with the master profile is in wind direction 380.

The turbine identification module 316 also includes a ranking module 328 that ranks the wind turbines in the optimal location to determine the one or more wind turbines whose turbine profile needs to be changed to the master profile based on the real-time operational data. For example, as show in FIG 3, the real-time operational data indicates the wind direction 380, accordingly the wind turbines 364 and 366 are in the optimum location. In an exemplary embodiment, the sensor 364a indicates overheating in a generator of the wind turbine 364. The processing unit 340 considers the wind direction 340 and the overheating condition in the wind turbine 364 and determines that the turbine profile of the wind turbine 366 must be changed to the master profile. In other words, role of the wind turbine 366 needs to be changed from the slave wind turbine to the master wind turbine.

Further, the processing unit 340 by means of the profile change module 318 dynamically changes the slave profile of the wind turbine 366 to the master profile. Accordingly, the profile change module 318 dynamically changes the master profile of the wind turbine 368 to the slave profile by means of a slave module 336. The change in the turbine profile is effected by means of a master activator module 332 and a master communication module 334. The master activator module 332 activates functions associated with the master profile in the wind turbine 366 and the master communication module 334 establishes control link between the wind turbine 366 with the wind turbines 362, 364 and 368.

FIGS 4A and 4B are a graphical representation of a wind farm 400 that illustrates an example condition in which wind direction 480, 490 is considered while determining the turbine profile of the wind turbines 422-440 in the wind farm 400. The wind farm 400 is an example embodiment of the wind farm 301 in Figure 3. In FIG 4A, the wind direction 480 at time T1 is towards the wind turbines 430 and 432. The system 300 analyzes the operating parameters, including the wind direction 480 and determines whether the turbine profile of the wind turbines 422-440 need to be changed. The processing unit 300 identifies the location and the wind turbine 430 for which the master profile is to be assigned. Accordingly, functions associated with the master profile in the wind turbine 430 are activated. The wind turbine 430 controls the wind turbines 422-428 and 432-440 by determining whether to start or stop the wind turbines 422-428 and 432-440.

FIG 4B, illustrates the step of dynamically changing the turbine profile of the wind turbines 440 and 430 based on the change in the wind direction. For example, at time T2, the wind direction changes from 480 in FIG 4A to 490 in FIG 4B. This change in the operating parameters is analyzed to determine whether the change in turbine profile of the wind turbines 422-440 is necessary based on the historical operational data of the wind farm 400. As seen in FIG 4B, the location suitable for having the wind turbine with the master profile is at 492. Therefore, the wind turbine 440 is selected to change the turbine profile to the master profile. In other words the wind turbine 440 is selected as the master wind turbine. Accordingly, the turbine profile of the wind turbine 430 changed from the master profile to the slave profile. As a result of the change in turbine profile, is the wind turbine 440 is strategically placed such that it is capable of accurately detecting unfavorable weather conditions. In the event that unfavorable weather conditions exist, the wind turbine 440 is configured to shut down the wind turbines 422-438 to avoid damage.

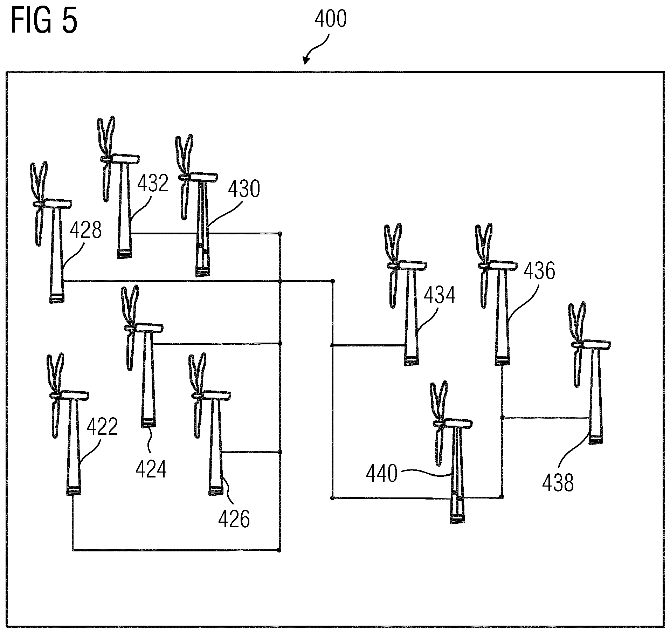

In an exemplary embodiment, the operating parameters indicate that multiple locations in the wind farm 400 are suitable for the master wind turbine. Therefore, it will be advantageous to have multiple master wind turbines to control the slave wind turbines. This example is further explained in FIG 5. FIG 5, illustrates a graphical representation of the wind farm 400 including the wind turbines 422-440. In this embodiment, the operating parameters, specifically the historical operational data are analyzed to determine that the wind turbines 430 and 440 have been pre-dominantly chosen as the master wind turbines. The wind turbines 430 and 440 are selected as the master wind turbines in view of the meteorological parameters/ weather conditions and the performance parameters of the wind turbines 430 and 440. Under unfavorable weather conditions the controlling actions are performed from the wind turbines 430 and 440. If any one of the wind turbine's sensor hardware is faulty, for example the wind turbine 430, the data of the sensor in the wind turbine 430 becomes invalid. In such a case, the processing unit 340 changes the turbine profile of the faulty wind turbine 430 to the slave profile. As a result, the wind turbine 440 considers the wind turbine 430 as slave wind turbine and performs controlling actions on the wind turbines 422-438. Therefore, the wind farm 400 is managed successfully even in the event of failure in the wind turbine 430.

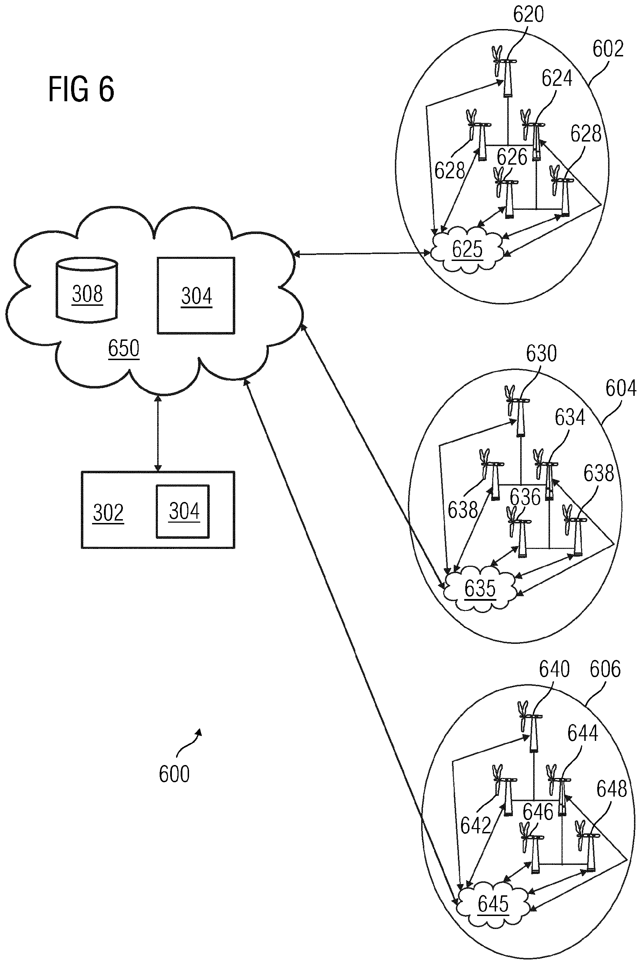

FIG 6 illustrates multiple clusters of wind turbines 602-606 of a wind farm 600. The wind farm 600 is an example embodiment of the wind farm 301 in Figure 3 that includes the device 302 to manage the wind turbine clusters 602-606. The wind turbine clusters 602-606 are located in different geographical locations. Each wind turbine cluster 602-606 comprises of wind turbines 624, 634, 644 in a master profile and remaining wind turbines in a slave profile. As seen in FIG 6, the wind turbine cluster 602 includes wind turbines 620-628, with the wind turbine 624 as the master wind turbine. In the wind turbine cluster 604 includes wind turbines 630-638, with the wind turbine 634 as the master wind turbine. Similarly, in the wind turbine cluster 606 includes wind turbines 640-648, with the wind turbine 644 as the master wind turbine. Each of the wind turbine clusters 602-606 also includes a communication network 625, 635 and 645. The communication networks 625, 635 and 645 transmit sensor data from the wind turbines and receive control data for managing the wind turbines in each of the clusters 602-606. The wind farm 600 also includes the system 300, as disclosed in FIGs 3, 4A , 4B and 5 , for managing the wind turbine clusters 602-606. As shown in FIG 6, controller 304 can be directly accessible by the device 302. In another embodiment of the controller 304 is configured on a cloud network 650 implemented in a cloud computing environment.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

### LIST OF REFERENCES

- 100 :: WIND FARM
- 102 :: MASTER WIND TURBINE
- 104 :: SLAVE WIND TURBINE
- 110, 112 :: WIND TURBINE GROUPS
- 118 :: WIND DIRECTION
- 300 :: SYSTEM
- 301 :: WIND FARM
- 302 :: DEVICE
- 304 :: CONTROLLER
- 308 :: DATABASE
- 310 :: MEMORY
- 312 :: INSULATING LAYER
- 314 :: ANALYZER
- 316 :: TURBINE IDENTIFICATION MODULE
- 318 :: PROFILE CHANGE MODULE
- 322 :: COMPARATOR
- 324 :: CHANGE VERIFICATION MODULE
- 326 :: LOCATION IDENTIFICATION MODULE
- 328 :: RANKING MODULE
- 332 :: MASTER ACTIVATOR MODULE
- 334 :: MASTER COMMUNICATION MODULE
- 338 :: SLAVE MODULE
- 340 :: PROCESSING UNIT
- 344 :: NETWORK INTERFACE
- 346 :: INPUT/OUTPUT DEVICE
- 350 :: COMMUNICATION NETWORK
- 362, 364, 366, 368 :: WIND TURBINES
- 380 :: WIND DIRECTION
- 422, 424, 426, 428, 430, 432, 434, 436, 438, 440 :: WIND TURBINES
- 480, 490 :: WIND DIRECTION
- 602,: 604, 606 : CLUSTERS OF WIND TURBINES
- 620-628, 630-638, 640-648 :: WIND TURBINES
- 625, 635 and 645 :: COMMUNICATION NETWORK
- 650 :: CLOUD NETWORK

## Claims

1. A method of managing a wind farm (301) with a plurality of wind turbines (362, 364, 366, 368), each wind turbine (362, 364, 366, 368) having a turbine profile, wherein the turbine profile is one of a master profile and a slave profile, wherein the wind turbine with the master profile is enabled to control and shut down the wind turbines with the slave profile of the wind farm (301), comprising:
monitoring meteorological parameters and performance parameters associated with the wind farm (301) in real-time to generate real-time operational data;
analyzing operating parameters associated with the wind farm (301), wherein the operating parameters comprise historical operational data and the real-time operational data associated with the wind farm (301);
determining at least one wind turbine (366) in the slave profile whose turbine profile needs to be changed from a slave profile to a master profile based on the analyzed operating parameters; and
dynamically changing the turbine profile of the at least one wind turbine (366) from the slave profile to the master profile.

2. The method according to claim 1, wherein analyzing operating parameters associated with the wind farm (301) comprises:
comparing the real-time operational data with preset operating parameters to determine a change in the operating parameters; and
determining whether the turbine profile of the at least one wind turbine (366) needs to be changed, based on the change in the operating parameters and historical operational data.

3. The method according to claim 1, wherein determining at least one wind turbine (366) whose turbine profile needs to be changed comprises:
determining a location in a plurality of locations in the wind farm (301) for a wind turbine with the master profile, based on the operating parameters;
ranking wind turbines in the location based on the real-time operational data; and
determining the at least one wind turbine (366) whose turbine profile needs to be changed to the master profile based on the ranking of the wind turbines.

4. The method according to claim 1, dynamically changing the turbine profile of the at least one wind turbine (366) from the slave profile to the master profile, further comprises:
activating functions associated with the master profile in the at least one wind turbine;
establishing a control link between the at least one wind turbine (366) in the master profile with wind turbines in the slave profile.

5. The method according to claim 1, further comprising:
dynamically changing the turbine profile of remaining wind turbines (368) to the slave profile.

6. A device for managing a wind farm (301) comprising:
a controller operably connected to each of the wind turbines via a communication network, the controller comprising:
a processing unit comprising one or more processors;
a memory communicatively coupled with the processing unit, the memory comprising modules of the device;
the modules of the device comprising:
an analyzer (314) for analyzing operating parameters associated with the wind farm (301), wherein the wind farm (301) comprises a plurality of wind turbines (362, 364, 366, 368), each wind turbine (362, 364, 366, 368) having a turbine profile, wherein the turbine profile is one of a master profile and a slave profile, wherein the wind turbine with the master profile is enabled to control and shut down the wind turbines with the slave profile of the wind farm (301), and wherein the operating parameters comprises historical operational data and real-time operational data associated with the wind farm (301);
a turbine identification module (316) for determining at least one wind turbine (366) in the slave profile whose turbine profile needs to be changed from a slave profile to a master profile based on the analyzed operating parameters;
a profile change module (318) for dynamically changing the turbine profile of the at least one wind turbine (366) from the slave profile to the master profile; and
a sensor interface (312) for monitoring meteorological parameters and performance parameters associated with the wind farm in real-time to generate the real time operational data.

7. The device according to claim 6, wherein the analyzer comprises:
a comparator (322) for comparing the real-time operational data with preset operating parameters to determine a change in the operating parameters; and
a change verification module (324) for determining whether the turbine profile of the at least one wind turbine (366) needs to be changed, based on the change in the operating parameters and historical operational data.

8. The device according to claim 6, wherein the turbine identification module comprises:
a location identification module (326) for determining a location in a plurality of locations in the wind farm (301) for a wind turbine with the master profile, based on the operating parameters; and
a ranking module (328) for ranking the plurality of wind turbines in the optimal location to determine the at least one wind turbine (366) whose turbine profile needs to be changed to the master profile.

9. The device according to claim 6, wherein the profile change module comprises:
a master activator module (332) for activating functions associated with the master profile in the at least one wind turbine;
a master communication module (334) for establishing control link between the at least one wind turbine (366) in the master profile with wind turbines in the slave profile.

10. A system (300) for managing a wind farm (301) comprising a device for managing the wind farm (301) according to one of the claims 6 to 9, and a plurality of wind turbines to be managed by the device.

11. The system (300) according to claim 10, further comprising:
a plurality of sensors (362a, 364a, 366a, 368a) to monitor operating parameters associated with the wind farm (301).

12. The system (300) according to claim 11, wherein each of the plurality of wind turbines comprise:
a communication device (362b, 364b, 366b, 368b) to transmit data captured by the sensors (362a, 364a, 366a, 368a).

13. A wind farm (600) comprising:
one or more clusters of wind turbines (602, 604, 606) located in different geographical locations, wherein each cluster comprises at least one wind turbine (624, 634, 635) in a master profile and the remaining wind turbines in a slave profile; and
a device according to one of the claims 6 to 9 for managing the one or more clusters of wind turbines as claimed in claims 10 to 12.

14. The wind farm (600) of claim 13, wherein each of the clusters comprises one or more wind turbines located in different geographical locations.

## Patentansprüche

1. Verfahren zum Verwalten eines Windparks (301) mit mehreren Windturbinen (362, 364, 366, 368), von denen jede ein Turbinenprofil aufweist, wobei es sich bei dem Turbinenprofil um ein Master- oder ein Slave-Profil handelt, wobei die Windturbine mit dem Master-Profil in der Lage ist, die Windturbinen des Windparks (301) mit dem Slave-Profil zu steuern und abzuschalten, wobei das Verfahren Folgendes umfasst:
Überwachen von mit dem Windpark (301) verknüpften meteorologischen Parametern und Leistungsparametern in Echtzeit zum Erzeugen von Echtzeit-Betriebsdaten,
Analysieren von mit dem Windpark (301) verknüpften Betriebsparametern, wobei die Betriebsparameter Betriebsverlaufsdaten und die mit dem Windpark (301) verknüpften Echtzeit-Betriebsdaten umfassen,
Bestimmen mindestens einer Windturbine (366) im Slave-Profil, deren Turbinenprofil von einem Slave-Profil zu einem Master-Profil geändert werden muss, auf der Grundlage der analysierten Betriebsparameter und
dynamisches Ändern des Turbinenprofils der mindestens einen Windturbine (366) vom Slave-Profil zum Master-Profil.

2. Verfahren nach Anspruch 1, wobei das Analysieren von mit dem Windpark (301) verknüpften Betriebsparametern Folgendes umfasst:
Vergleichen der Echtzeit-Betriebsdaten mit voreingestellten Betriebsparametern zum Bestimmen einer Änderung der Betriebsparameter und
Bestimmen auf der Grundlage der Änderung der Betriebsparameter und der Betriebsverlaufsdaten, ob das Turbinenprofil der mindestens einen Windturbine (366) geändert werden muss.

3. Verfahren nach Anspruch 1, wobei das Bestimmen mindestens einer Windturbine (366), deren Turbinenprofil geändert werden muss, Folgendes umfasst:
Bestimmen eines Standorts unter mehreren Standorten in dem Windpark (301) für eine Windturbine mit dem Master-Profil auf der Grundlage der Betriebsparameter,
Klassifizieren von Windturbinen am Standort auf der Grundlage der Echtzeit-Betriebsdaten und
Bestimmen der mindestens einen Windturbine (366), deren Turbinenprofil zum Master-Profil geändert werden muss, auf der Grundlage der Klassifizierung der Windturbinen.

4. Verfahren nach Anspruch 1, wobei das dynamische Ändern des Turbinenprofils der mindestens einen Windturbine (366) vom Slave-Profil zum Master-Profil ferner Folgendes umfasst:
Aktivieren von Funktionen bei der mindestens einen Windturbine, die mit dem Master-Profil verknüpft sind,
Herstellen einer Steuerverbindung zwischen der mindestens einen Windturbine (366) im Master-Profil und Windturbinen im Slave-Profil.

5. Verfahren nach Anspruch 1, das ferner Folgendes umfasst:
dynamisches Ändern des Turbinenprofils der verbleibenden Windturbinen (368) zum Slave-Profil.

6. Vorrichtung zum Verwalten eines Windparks (301), die Folgendes umfasst:
eine Steuerung, die über ein Kommunikationsnetzwerk mit jeder der Windturbinen wirkverbunden ist und Folgendes umfasst:
eine Verarbeitungseinheit, die einen oder mehrere Prozessoren umfasst,
einen Speicher, der zum Austauschen von Daten mit der Verarbeitungseinheit gekoppelt ist, wobei der Speicher Module der Vorrichtung umfasst,
wobei die Module der Vorrichtung Folgendes umfassen:
einen Analysator (314) zum Analysieren von mit dem Windpark (301) verknüpften Betriebsparametern, wobei der Windpark (301) mehrere Windturbinen (362, 364, 366, 368) umfasst, von denen jede ein Turbinenprofil aufweist, wobei es sich bei dem Turbinenprofil um ein Master- oder ein Slave-Profil handelt,
wobei die Windturbine mit dem Master-Profil in der Lage ist, die Windturbinen des Windparks (301) mit dem Slave-Profil zu steuern und abzuschalten und die Betriebsparameter mit dem Windpark (301) verknüpfte Betriebsverlaufsdaten und Echtzeit-Betriebsdaten umfassen,
ein Turbinenidentifikationsmodul (316) zum Bestimmen mindestens einer Windturbine (366) im Slave-Profil, deren Turbinenprofil von einem Slave-Profil zu einem Master-Profil geändert werden muss, auf der Grundlage der analysierten Betriebsparameter,
ein Profiländerungsmodul (318) zum dynamischen Ändern des Turbinenprofils der mindestens einen Windturbine (366) vom Slave-Profil zum Master-Profil und
eine Sensorschnittstelle (312) zum Überwachen von mit dem Windpark verknüpften meteorologischen Parametern und Leistungsparametern in Echtzeit zum Erzeugen der Echtzeit-Betriebsdaten.

7. Vorrichtung nach Anspruch 6, wobei der Analysator Folgendes umfasst:
einen Vergleicher (322) zum Vergleichen der Echtzeit-Betriebsdaten mit voreingestellten Betriebsparametern zum Bestimmen einer Änderung der Betriebsparameter und
ein Änderungsverifiziermodul (324) zum Bestimmen auf der Grundlage der Änderung der Betriebsparameter und der Betriebsverlaufsdaten, ob das Turbinenprofil der mindestens einen Windturbine (366) geändert werden muss.

8. Vorrichtung nach Anspruch 6, wobei das Turbinenidentifikationsmodul Folgendes umfasst:
ein Standortidentifikationsmodul (326) zum Bestimmen eines Standorts unter mehreren Standorten in dem Windpark (301) für eine Windturbine mit dem Master-Profil auf der Grundlage der Betriebsparameter und
ein Klassifizierungsmodul (328) zum Klassifizieren der mehreren Windturbinen am optimalen Standort zwecks Bestimmens der mindestens einen Windturbine (366), deren Turbinenprofil zum Master-Profil geändert werden muss.

9. Vorrichtung nach Anspruch 6, wobei das Profiländerungsmodul Folgendes umfasst:
ein Master-Aktiviermodul (332) zum Aktivieren von Funktionen bei der mindestens einen Windturbine, die mit dem Master-Profil verknüpft sind,
ein Master-Kommunikationsmodul (334) zum Herstellen einer Steuerverbindung zwischen der mindestens einen Windturbine (366) im Master-Profil und Windturbinen im Slave-Profil.

10. System (300) zum Verwalten eines Windparks (301) mit einer Vorrichtung zum Verwalten des Windparks (301) nach einem der Ansprüche 6 bis 9 und mehreren von der Vorrichtung zu verwaltenden Windturbinen.

11. System (300) nach Anspruch 10, das ferner Folgendes umfasst:
mehrere Sensoren (362a, 364a, 366a, 368a) zum Überwachen von mit dem Windpark (301) verknüpften Betriebsparametern.

12. System (300) nach Anspruch 11, wobei jede der mehreren Windturbinen Folgendes umfasst:
eine Kommunikationsvorrichtung (362b, 364b, 366b, 368b) zum Übertragen von von den Sensoren (362a, 364a, 366a, 368a) erfassten Daten.

13. Windpark (600), der Folgendes umfasst:
eine oder mehrere Gruppen von Windturbinen (602, 604, 606) an verschiedenen geografischen Standorten, wobei sich bei jeder Gruppe mindestens eine Windturbine (624, 634, 635) in einem Master-Profil und die restlichen Windturbinen in einem Slave-Profil befinden, und
eine Vorrichtung nach einem der Ansprüche 6 bis 9 zum Verwalten der einen oder der mehreren Gruppen von Windturbinen nach den Ansprüchen 10 bis 12.

14. Windpark (600) nach Anspruch 13, wobei jede der Gruppen eine oder mehrere Windturbinen an verschiedenen geografischen Standorten umfasst.

## Revendications

1. Procédé de gestion d'un parc éolien (301) avec une pluralité d'éoliennes (362, 364, 366, 368), chaque éolienne (362, 364, 366, 368) ayant un profil de turbine, dans lequel le profil de turbine est l'un d'un profil maître et d'un profil esclave, dans lequel la turbine éolienne avec le profil maître est habilitée à commander et à mettre à l'arrêt les turbines éoliennes avec le profil esclave du parc éolien (301), comprenant :
la surveillance de paramètres météorologiques et de paramètres de performance associés au parc éolien (301) en temps réel pour générer des données opérationnelles en temps réel ;
l'analyse de paramètres opérationnels associés au parc éolien (301), dans lequel les paramètres opérationnels comprennent des données opérationnelles historiques et les données opérationnelles en temps réel associées au parc éolien (301) ;
la détermination d'au moins une éolienne (366) dans le profil esclave dont le profil de turbine nécessite de changer pour passer d'un profil esclave à un profil maître en se basant sur les paramètres opérationnels analysés ; et
le changement dynamique du profil de turbine de l'au moins une éolienne (366) pour passer du profil esclave au profil maître.

2. Procédé selon la revendication 1, dans lequel l'analyse de paramètres opérationnels associés au parc éolien (301) comprend :
la comparaison des données opérationnelles en temps réel avec des paramètres opérationnels prédéfinis pour déterminer un changement dans les paramètres opérationnels ; et
la détermination de si le profil de turbine de l'au moins une éolienne (366) doit être changé, en se basant sur le changement dans les paramètres opérationnels et les données opérationnelles historiques.

3. Procédé selon la revendication 1, dans lequel la détermination d'au moins une éolienne (366) dont le profil de turbine doit être changé comprend :
la détermination d'un emplacement dans une pluralité d'emplacements dans le parc éolien (301) pour une éolienne avec le profil maître, en se basant sur les paramètres opérationnels ;
le classement des éoliennes dans l'emplacement en se basant sur les données opérationnelles en temps réel ; et
la détermination de l'au moins une éolienne (366) dont le profil de turbine doit être changé pour passer au profil maître en se basant sur le classement des turbines éoliennes.

4. Procédé selon la revendication 1, le changement dynamique du profil de turbine de l'au moins une éolienne (366) pour passer du profil esclave au profil maître, comprenant en outre :
l'activation de fonctions associées au profil maître dans l'au moins une éolienne ;
l'établissement d'une liaison de commande entre l'au moins une éolienne (366) dans le profil maître avec des éoliennes dans le profil esclave.

5. Procédé selon la revendication 1, comprenant en outre :
le changement dynamique du profil de turbine des éoliennes (368) restantes pour passer au profil esclave.

6. Dispositif destiné à gérer un parc éolien (301) comprenant :
un élément de commande raccordé de manière opérationnelle à chacune des éoliennes via un réseau de communication, l'élément de commande comprenant :
une unité de traitement comprenant un ou plusieurs processeurs ;
une mémoire couplée pour la communication avec l'unité de traitement, la mémoire comprenant des modules du dispositif ;
les modules du dispositif comprenant :
un analyseur (314) destiné à analyser des paramètres opérationnels associés au parc éolien (301), dans lequel le parc éolien (301) comprend une pluralité d'éoliennes (362, 364, 366, 368), chaque éolienne (362, 364, 366, 368) ayant un profil de turbine, dans lequel le profil de turbine est l'un d'un profil maître et d'un profil esclave, dans lequel l'éolienne avec le profil maître est habilitée à commander et à mettre à l'arrêt les éoliennes avec le profil esclave du parc éolien (301), et dans lequel les paramètres opérationnels comprennent des données opérationnelles historiques et des données opérationnelles en temps réel associées au parc éolien (301) ;
un module d'identification de turbine (316) destiné à déterminer au moins une éolienne (366) dans le profil esclave dont le profil de turbine doit être changé pour passer d'un profil esclave à un profil maître en se basant sur les paramètres opérationnels analysés ;
un module de changement de profil (318) destiné à changer de manière dynamique le profil de turbine de l'au moins une éolienne (366) pour passer du profil esclave au profil maître ; et
une interface de capteurs (312) destinée à surveiller des paramètres météorologiques et des paramètres de performance associés au parc éolien en temps réel pour générer les données opérationnelles en temps réel.

7. Dispositif selon la revendication 6, dans lequel l'analyseur comprend :
un comparateur (322) destiné à comparer les données opérationnelles en temps réel avec des paramètres opérationnels prédéfinis pour déterminer un changement dans les paramètres opérationnels ; et
un module de vérification de changement (324) destiné à déterminer si le profil de turbine de l'au moins une éolienne (366) doit être changé, en se basant sur le changement dans les paramètres opérationnels et les données opérationnelles historiques.

8. Dispositif selon la revendication 6, dans lequel le module d'identification de turbine comprend :
un module d'identification d'emplacement (326) destiné à déterminer un emplacement dans une pluralité d'emplacements dans le parc éolien (301) pour une éolienne avec le profil maître, en se basant sur les paramètres opérationnels ; et
un module de classement (328) destiné à classer la pluralité d'éoliennes dans l'emplacement optimal pour déterminer l'au moins une éolienne (366) dont le profil de turbine doit être changé pour passer au profil maître.

9. Dispositif selon la revendication 6, dans lequel le module de changement de profil comprend :
un module d'activateur maître (332) destiné à activer des fonctions associées au profil maître dans l'au moins une éolienne ;
un module de communication maître (334) destiné à établir une liaison de commande entre l'au moins une éolienne (366) dans le profil maître et des éoliennes dans le profil esclave.

10. Système (300) destiné à gérer un parc éolien (301) comprenant un dispositif destiné à gérer le parc éolien (301) selon l'une des revendications 6 à 9, et une pluralité d'éoliennes à gérer par le dispositif.

11. Système (300) selon la revendication 10, comprenant en outre :
une pluralité de capteurs (362a, 364a, 366a, 368a) pour surveiller des paramètres opérationnels associés au parc éolien (301).

12. Système (300) selon la revendication 11, dans lequel chacune de la pluralité d'éoliennes comprend :
un dispositif de communication (362b, 364b, 366b, 368b) pour transmettre des données capturées par les capteurs (362a, 364a, 366a, 368a).

13. Parc éolien (600) comprenant :
un ou plusieurs groupes d'éoliennes (602, 604, 606) situés dans différents emplacements géographiques, dans lequel chaque groupe comprend au moins une éolienne (624, 634, 635) dans un profil maître et les éoliennes restantes dans un profil esclave ; et
un dispositif selon l'une des revendications 6 à 9 destiné à gérer les un ou plusieurs groupes d'éoliennes selon les revendications 10 à 12.

14. Parc éolien (600) selon la revendication 13, dans lequel chacun des groupes comprend une ou plusieurs éoliennes situées dans différents emplacements géographiques.
